(19)

Europäisches
Patentamt
European
Patent Office
Office européen
des brevets

(11) **EP 4 224 130 A1**

(12) **EUROPEAN PATENT APPLICATION**
published in accordance with Art. 153(4) EPC

(43) Date of publication:
**09.08.2023 Bulletin 2023/32**

(21) Application number: **21875085.9**

(22) Date of filing: **06.09.2021**

(51) International Patent Classification (IPC):
$G01L\ 1/24$ (2006.01)      $G01L\ 1/00$ (2006.01)
$G01L\ 5/00$ (2006.01)

(52) Cooperative Patent Classification (CPC):
**G01L 1/00; G01L 1/24; G01L 5/00**

(86) International application number:
**PCT/JP2021/032591**

(87) International publication number:
**WO 2022/070783 (07.04.2022 Gazette 2022/14)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **02.10.2020 JP 2020167413**

(71) Applicant: **FUJIFILM Corporation
Tokyo 106-8620 (JP)**

(72) Inventor: **YAMAZAKI, Yoshiro
Tokyo 106-8620 (JP)**

(74) Representative: **Meissner Bolte Partnerschaft
mbB
Widenmayerstrasse 47
80538 München (DE)**

(54) **IMAGE PROCESSING DEVICE, IMAGE PROCESSING METHOD, PROGRAM, AND RECORDING
MEDIUM**

(57) In an image processing apparatus, an image processing method, a program, and a recording medium, an image signal of a captured image of an object to be imaged including a measurement sheet that has developed a color of a density corresponding to an external energy amount under application of external energy, and including a regular pattern provided on the measurement sheet is acquired, and processing of canceling out an effect of a spectral distribution of illumination light in a case of imaging of the object to be imaged is executed on an image signal of the measurement sheet in the captured image based on an image signal of the pattern in the object to be imaged and on a spectral characteristic value of the pattern.

FIG. 3

```
                    START

        ACQUIRE IMAGE SIGNAL OF CAPTURED IMAGE          ~S1

        CALCULATE FIRST RATIO OF IMAGE SIGNAL           ~S2
               OF MEASUREMENT SHEET

        CALCULATE SECOND RATIO OF IMAGE SIGNAL          ~S3
                    OF PATTERN

        CALCULATE THIRD RATIO                           ~S4
        OF SPECTRAL CHARACTERISTIC VALUE OF PATTERN

        CALCULATE FOURTH RATIO OF SPECTRAL              ~S5
        CHARACTERISTIC VALUE OF MEASUREMENT SHEET

        ESTIMATE SURFACE DISTRIBUTION                   ~S6
          OF EXTERNAL ENERGY AMOUNT

                     END
```

EP 4 224 130 A1

**Description**

**BACKGROUND OF THE INVENTION**

1. Field of the Invention

The present invention relates to an image processing apparatus, an image processing method, a program, and a recording medium for estimating a surface distribution of an external energy amount applied to a measurement sheet based on a color optical density of the measurement sheet.

2. Description of the Related Art

A measurement sheet that has developed a color of a predetermined density corresponding to an external energy amount under application of external energy is imaged using an imaging apparatus such as a camera, and a surface distribution of the external energy amount applied to the measurement sheet is estimated from an image signal (density value) of each pixel of a captured image.

For example, JP2015-215291A and WO2006/040832A are prior art documents as a reference for the present invention.

JP2015-215291A discloses an energy measurement system that images a measurement region of a color developing sheet in a state where a sheet-shaped marker having a constant density region overlaps with the color developing sheet, acquires a change in light quantity in the measurement region from a difference in density with respect to the constant density region included in a captured image, corrects a density of a color in the measurement region based on the change in light quantity, and converts the corrected density of the color in the measurement region into an energy value applied to the color developing sheet.

WO2006/040832A discloses a dot pattern scanning system that irradiates, with infrared light or ultraviolet light, a medium surface on which a dot pattern generated by arranging key dots, information dots, or lattice dots in accordance with a predetermined rule is printed, recognizes the dot pattern by scanning reflected light using optical scanning means, and outputs data corresponding to the dot pattern.

**SUMMARY OF THE INVENTION**

In a case of imaging the measurement sheet under an environment in which illumination light is provided by external illumination, in order to accurately image the color optical density of the measurement sheet, it is necessary to implement intensity of the illumination light and a surface distribution of the intensity suitable for imaging by converting direct light provided by the external illumination to indirect light using a parasol or the like and furthermore, by causing the indirect light to overlap from multiple directions. However, adjustment by installing illumination equipment for the external illumination is complicated, and imaging the measurement sheet using only ceiling illumination equipment, desk light illumination equipment, and the like is much more convenient.

In a case of imaging the measurement sheet using only the ceiling illumination equipment, the desk light illumination equipment, and the like, in other words, in a case of imaging the measurement sheet using a mixed light source in which illumination light of a plurality of different colors coexists, a phenomenon in which the surface distribution of the intensity of the illumination light is not uniform, and in which a spectral distribution (spectrum) of the illumination light varies depending on a location on the captured image of the measurement sheet because of overlapping of the illumination light provided by a plurality of different pieces of illumination equipment is known to occur.

In a case where the measurement sheet is imaged under an environment in which the surface distribution of the intensity of the illumination light is not uniform, and in which the spectral distribution of the illumination light varies depending on a location on the captured image of the measurement sheet, a distribution of an image signal that is originally not present occurs in a region of the captured image of the measurement sheet corresponding to a region of the measurement sheet that has developed a color of the same density. The distribution of the image signal that is originally not present is caused by the non-uniformity of the surface distribution of the intensity of the illumination light and by the variation in the spectral distribution of the illumination light depending on a location on the captured image of the measurement sheet.

In a case of imaging the measurement sheet using the mixed light source, the distribution of the image signal that is originally not present causes a problem of being unable to accurately estimate the surface distribution of the external energy amount applied to the measurement sheet from the captured image of each pixel of the measurement sheet.

An object of the present invention is to provide an image processing apparatus, an image processing method, a program, and a recording medium that enable a surface distribution of an external energy amount applied to a measurement sheet to be accurately estimated from an image signal of a captured image of the measurement sheet imaged under any illumination light.

In order to accomplish the above object, according to an aspect of the present invention, there is provided an image processing method comprising acquiring an image signal of a captured image of an object to be imaged including a measurement sheet that has developed a color of a density corresponding to an external energy amount under application of external energy, and including a regular pattern provided on the measurement sheet, and executing, on an image signal of the measurement sheet in the captured image, processing of canceling out an effect of a spectral distribution of illumination light in a case of imaging of the object to be imaged based on an image signal of the pattern in the object to be imaged and on a spectral characteristic value of the pattern.

Here, it is preferable that an image signal of a first captured image corresponding to a first spectral sensitivity and an image signal of a second captured image corresponding to a second spectral sensitivity of the object to be imaged captured by a sensor are acquired, a first ratio between a first image signal corresponding to the first spectral sensitivity of the measurement sheet in the first captured image and a second image signal corresponding to the second spectral sensitivity of the measurement sheet in the second captured image is calculated for each pixel, a second ratio between a third image signal corresponding to the first spectral sensitivity of the pattern in the first captured image and a fourth image signal corresponding to the second spectral sensitivity of the pattern in the second captured image is calculated for each pixel, a third ratio between a first spectral characteristic value corresponding to the first spectral sensitivity of the pattern and a second spectral characteristic value corresponding to the second spectral sensitivity of the pattern is calculated, and a fourth ratio between a third spectral characteristic value corresponding to the first spectral sensitivity of the measurement sheet in the first captured image and a fourth spectral characteristic value corresponding to the second spectral sensitivity of the measurement sheet in the second captured image is calculated for each pixel by executing the processing on the first ratio based on the second ratio and on the third ratio.

In addition, it is preferable that a wavelength range corresponding to at least one of the first spectral sensitivity or the second spectral sensitivity has a full width at half maximum of less than or equal to 30 nm.

In addition, it is preferable that a surface distribution of the external energy amount applied to the measurement sheet is estimated from the fourth ratio based on a relationship between the fourth ratio and the external energy amount applied to the measurement sheet.

In addition, it is preferable that the pattern is formed on the measurement sheet.

In addition, it is preferable that the pattern is formed on a pressing plate, a region in which the pattern is formed in the pressing plate has an optical characteristic of mainly having a reflected light component with respect to at least the first spectral sensitivity or the second spectral sensitivity, a region in which the pattern is not formed in the pressing plate has an optical characteristic of mainly having a transmitted light component with respect to at least the first spectral sensitivity or the second spectral sensitivity, and the pressing plate is disposed to overlap on the measurement sheet.

In addition, it is preferable that in the pressing plate, a surface directly irradiated with the illumination light has a light scattering property, and the pattern is formed on a surface that is in contact with the measurement sheet.

In addition, it is preferable that the object to be imaged including the measurement sheet and the pattern is imaged in a state where the measurement sheet is disposed on a surface having uniform reflectance in a support plate, and where the pressing plate is disposed to overlap on the measurement sheet.

In addition, it is preferable that the object to be imaged including the measurement sheet and the pattern is imaged in a state where positions of the support plate, the measurement sheet, and the pressing plate are fixed using a position fixing mechanism.

In addition, it is preferable that a color of the pattern has a different hue from a color of a color developing portion of the measurement sheet.

In addition, it is preferable that a plurality of hue regions of which the hues are different from each other are extracted from the captured image, a region of the pattern is specified from among the plurality of hue regions based on arrangement information of the pattern, and the image signal of the pattern after interpolation is generated by interpolating a region in which the pattern is not present, using a two-dimensional interpolation technology, and the processing is executed on the image signal of the measurement sheet in the object to be imaged based on the image signal of the pattern after interpolation.

In addition, it is preferable that a plurality of hue regions of which the hues are different from each other are extracted from the captured image, a region of the measurement sheet is specified from among the plurality of hue regions based on arrangement information of the pattern, and the image signal of the measurement sheet after interpolation is generated by interpolating a region in which the pattern is present using a two-dimensional interpolation technology, and the processing is executed on the image signal of the measurement sheet after interpolation.

In addition, according to another aspect of the present invention, there is provided an image processing apparatus comprising a processor, in which the processor is configured to acquire an image signal of a captured image of an object to be imaged including a measurement sheet that has developed a color of a density corresponding to an external energy amount under application of external energy, and including a regular pattern provided on the measurement sheet, and execute, on an image signal of the measurement sheet in the captured image, processing of canceling out an effect of a spectral distribution of illumination light in a case of imaging of the object to be imaged based on an image signal of the pattern in the object to be imaged and on a spectral characteristic value of the pattern.

In addition, according to still another aspect of the present invention, there is provided a program causing a computer to execute each step of the image processing method.

In addition, according to still another aspect of the present invention, there is provided a computer readable recording medium on which a program causing a computer to execute each step of the image processing method is recorded.

According to the present invention, effects of the surface distribution of intensity of the illumination light and of the spectral distribution of the illumination light can be canceled out from the image signal of the measurement sheet in the captured image. Accordingly, a user can image an object to be measured under any illumination light without considering the surface distribution of the intensity of the illumination light and the spectral distribution of the illumination light, and accurately estimate the surface distribution of the external energy amount applied to the measurement sheet from the image signal (color optical density) of the measurement sheet in the captured image.

## BRIEF DESCRIPTION OF THE DRAWINGS

Fig. 1 is a block diagram of an embodiment representing a configuration of an image processing apparatus according to an embodiment of the present invention.
Fig. 2 is a block diagram of an embodiment representing an internal configuration of a processor.
Fig. 3 is a flowchart representing an operation of the image processing apparatus.
Fig. 4 is a plan view concept diagram of an example representing a configuration of an object to be imaged.
Fig. 5 is a plan view concept diagram of an example representing a configuration of a measurement sheet.
Fig. 6A is a plan view concept diagram of an example representing a configuration of a pressing plate.
Fig. 6B is a side view exterior diagram of an example representing the configuration of the pressing plate.
Fig. 7 is a side view concept diagram of an example representing a positional relationship between the pressing plate and the measurement sheet.
Fig. 8 is a side view concept diagram of an example representing a configuration in a case of imaging the object to be imaged.

## DESCRIPTION OF THE PREFERRED EMBODIMENTS

Hereinafter, an image processing apparatus, an image processing method, a program, and a recording medium according to an embodiment of the present invention will be described in detail based on a preferred embodiment illustrated in the appended drawings.

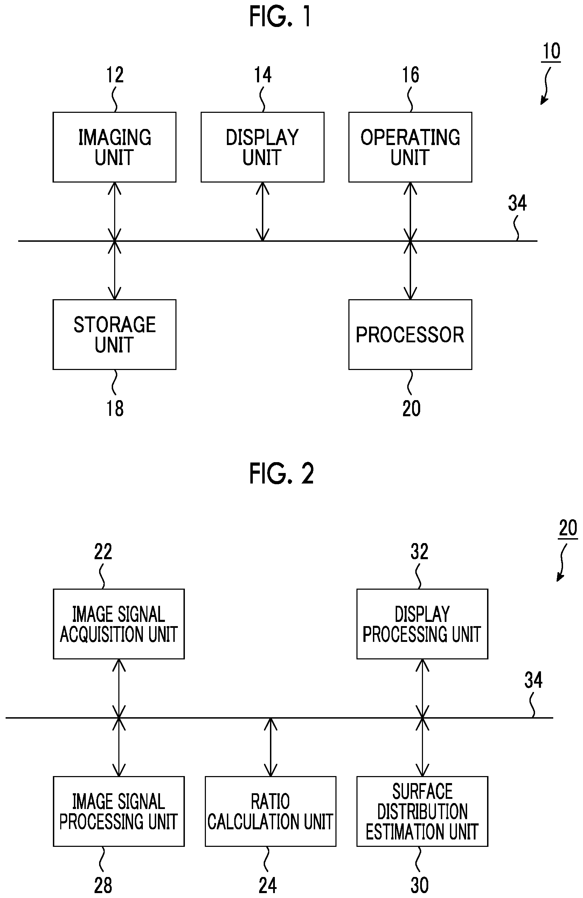

Fig. 1 is a block diagram of an embodiment representing a configuration of the image processing apparatus according to the embodiment of the present invention. An image processing apparatus 10 illustrated in Fig. 1 estimates a surface distribution of an external energy amount applied to a measurement sheet based on a color optical density of the measurement sheet. The image processing apparatus 10 of the present embodiment is a smartphone having a camera function and comprises an imaging unit 12, a display unit 14, an operating unit 16, a storage unit 18, and a processor 20 as illustrated in Fig. 1. The display unit 14, the operating unit 16, the imaging unit 12, the storage unit 18, and the processor 20 are bidirectionally connected through an internal bus 34 and can transmit and receive data to and from each other.

The imaging unit 12 includes a sensor and, under control of the processor 20, outputs an image signal of a captured image obtained by imaging an object to be imaged using the sensor under any illumination light. The imaging unit 12 of the present embodiment corresponds to the camera function of the smartphone and outputs the image signal of the captured image obtained by imaging the object to be imaged including the measurement sheet and a pattern using the sensor. More specifically, the imaging unit 12 outputs an image signal of a first captured image and an image signal of a second captured image corresponding to a first spectral sensitivity and to a second spectral sensitivity.

The imaging unit 12 of the present embodiment outputs the image signal of the first captured image and the image signal of the second captured image by imaging the object to be imaged at the same time using two sensors including a first sensor having the first spectral sensitivity and a second sensor having the second spectral sensitivity. In this case, the image signal of the first captured image corresponding to the first spectral sensitivity and the image signal of the second captured image corresponding to the second spectral sensitivity can be output at the same time by performing imaging once.

The imaging unit 12 may output the image signal of the first captured image corresponding to the first spectral sensitivity by imaging the object to be imaged using the sensor and a first optical filter through which light of a wavelength range corresponding to the first spectral sensitivity is transmitted, and then, output the image signal of the second captured image corresponding to the second spectral sensitivity by imaging the object to be imaged using the sensor and a second optical filter through which light of a wavelength range corresponding to the second spectral sensitivity is transmitted. That is, the image signal of the first captured image corresponding to the first spectral sensitivity and the image signal of the second captured image corresponding to the second spectral sensitivity may be sequentially output by performing imaging twice.

A wavelength range corresponding to at least one of the first spectral sensitivity or the second spectral sensitivity has a full width at half maximum of less than or equal to 30 nm. It is desirable that wavelength ranges of both of the first spectral sensitivity and the second spectral sensitivity have a full width at half maximum of less than or equal to 30 nm. In addition, the wavelength ranges corresponding to the first spectral sensitivity and to the second spectral sensitivity are desirably narrower ranges, for example, more desirably less than or equal to 20 nm and most desirably less than or equal to 10 nm.

Here, in a case where a spectral distribution of illumination light changes, a density (tint) corresponding to a spectral characteristic value of a coloring material of the measurement sheet looks different. This phenomenon is generally a problem of color rendering. Meanwhile, in a case where the wavelength range corresponding to the spectral sensitivity in a case of imaging of the object to be imaged is a narrow range having a full width at half maximum of less than or equal to 30 nm, an effect of the color rendering can be almost eliminated by, as will be described later, estimating the surface distribution of the external energy amount applied to the measurement sheet based on a fourth ratio of the spectral characteristic value of the measurement sheet in the captured image.

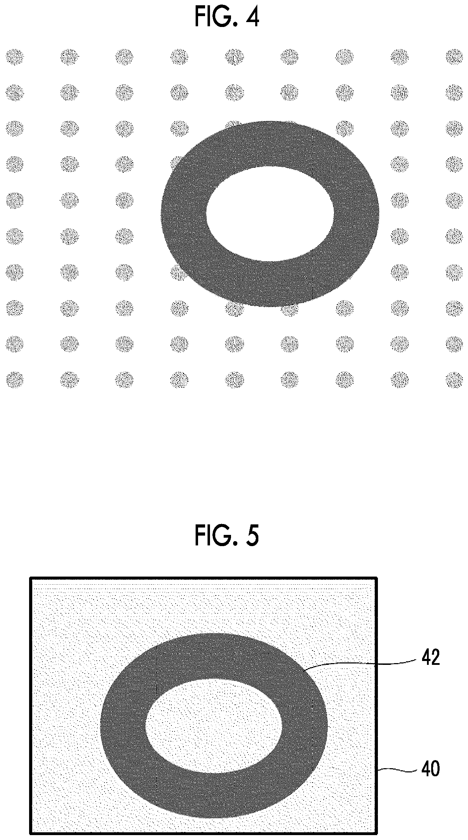

The measurement sheet has a sheet shape like paper, a sheet, a film, and the like. A color developing portion that has developed a color of a predetermined shape and of a predetermined density (tint) corresponding to an external energy amount under application of external energy is formed on at least one surface of the measurement sheet. As illustrated in Fig. 4, the color developing portion having a donut shape is formed in a center portion of the measurement sheet of the present embodiment. While the measurement sheet is not particularly limited, examples of the measurement sheet include a pressure-sensitive sheet, a heat-sensitive sheet, and an ultraviolet ray (or a near-infrared ray or a mid-infrared ray) sheet.

The pressure-sensitive sheet, the heat-sensitive sheet, and the ultraviolet ray sheet develop the color of the predetermined shape and of the predetermined density corresponding to the applied external energy amount under application of the external energy such as a pressure, a temperature, and an ultraviolet ray (or a near-infrared ray or a mid-infrared ray), respectively. A surface distribution of the external energy amount applied to the measurement sheet can be measured based on the shape and the density of the color developing portion formed on the surface of the measurement sheet.

There are two types of pressures of an instantaneous pressure and a continuous pressure applied to the pressure-sensitive sheet. The instantaneous pressure is a magnitude of the external energy instantaneously applied to the measurement sheet. On the other hand, the continuous pressure is a time-integral of the magnitude of the external energy continuously applied to the measurement sheet. The external energy amount includes both of the magnitude of the external energy based on the instantaneous pressure and the time-integral of the magnitude of the external energy based on the continuous pressure. The same applies to the heat-sensitive sheet, the ultraviolet ray sheet, and the like. In a case of the heat-sensitive sheet, the color optical density when the heat-sensitive sheet is brought into contact with a heat source changes depending on a temperature of the heat source and on an amount of contact time (an energy amount of a time-integral of the temperature). In a case of the ultraviolet ray sheet, the color optical density when the ultraviolet ray is received corresponds to a light quantity of the received ultraviolet ray and to an amount of light reception time (an energy amount of a time-integral of the light quantity).

The pattern is a regular repeating pattern provided on the measurement sheet. As will be described in detail later, the pattern is used for canceling out an effect of the spectral distribution of the illumination light in a case of imaging of the object to be imaged from the image signal of the measurement sheet. As illustrated in Fig. 4, the pattern of the present embodiment is a dot pattern in which a plurality of circular dots of a predetermined color are regularly arranged in an up-down direction and in a left-right direction of the measurement sheet, and is formed in advance on the measurement sheet.

While the color of the pattern may be the same as the color of the color developing portion of the measurement sheet, the color of the pattern has a different hue from the color of the color developing portion of the measurement sheet in the present embodiment. While a combination of the colors is not particularly limited, the color of the pattern is gray in a case where, for example, the color of the color developing portion of the measurement sheet is red. In addition, in a case where the color of the color developing portion of the measurement sheet is green, the color of the pattern may be yellow. In a case where the color of the color developing portion of the measurement sheet is blue, the color of the pattern may be red.

The dots constituting the dot pattern are not particularly limited in shape, size, arrangement interval, number, and the like. For example, the dot pattern may consist of a plurality of dots having a polygonal shape such as a triangular shape and a quadrangular shape, star-shaped dots, elliptical dots, or the like. Alternatively, the pattern is not limited to the dot pattern and may be a lattice pattern or the like composed of a plurality of straight lines extending in the left-right direction and of a plurality of straight lines extending in the up-down direction orthogonal to the left-right direction.

The display unit 14 displays various images, information, and the like under control of the processor 20. For example, the display unit 14 is composed of a display such as a liquid crystal display (LCD), an organic electroluminescence (EL) display, a light emitting diode (LED) display, or an electronic paper. A touch panel that receives a touch operation performed by a user of the image processing apparatus 10 is provided in the display unit 14 of the present embodiment.

The operating unit 16 receives an operation of the user under control of the processor 20. The operating unit 16 includes a plurality of buttons provided on an outer surface of a housing of the image processing apparatus 10, a graphical user interface of the touch panel provided in the display unit 14, and the like. In a case of imaging the object to be imaged or of setting various setting items, the user performs a corresponding operation through the operating unit 16.

The storage unit 18 stores the captured image, that is, the image signal and the like, of the object to be imaged captured by the imaging unit 12 under control of the processor 20. The storage unit 18 of the present embodiment is a memory device or the like that stores the captured image of the object to be imaged captured by the imaging unit 12. In addition, the storage unit 18 stores a program executed by the processor 20, various data, and the like.

The processor 20 controls each unit of the image processing apparatus 10 and executes various types of processing including imaging of the object to be imaged, storage of the image, display of the image, and the like. As illustrated in Fig. 2, the processor 20 comprises an image signal acquisition unit 22, a ratio calculation unit 24, an image signal processing unit 28, a surface distribution estimation unit 30, and a display processing unit 32. The processor 20 functions as each processing unit by causing the processor 20 to execute the program stored in the storage unit 18. The image signal acquisition unit 22, the ratio calculation unit 24, the image signal processing unit 28, the surface distribution estimation unit 30, and the display processing unit 32 are bidirectionally connected through the internal bus 34 and can transmit and receive data to and from each other.

The image signal acquisition unit 22 controls an operation of the imaging unit 12 in accordance with an operation (imaging instruction) of the user performed through the operating unit 16 and acquires the captured image, that is, the image signal, of the object to be imaged captured by the sensor. The image signal acquisition unit 22 of the present embodiment acquires the image signal of the first captured image corresponding to the first spectral sensitivity and the image signal of the second captured image corresponding to the second spectral sensitivity of the object to be imaged captured by the sensor.

The ratio calculation unit 24 calculates a ratio between image signals corresponding to different spectral sensitivities of the captured image of the object to be imaged. In addition, the ratio calculation unit 24 calculates a ratio between spectral characteristic values, that is, spectral reflectance or spectroscopic transmittance, corresponding to different spectral sensitivities of the pattern.

The ratio calculation unit 24 of the present embodiment calculates, for each pixel, a first ratio between a first image signal corresponding to the first spectral sensitivity of the measurement sheet in the first captured image and a second image signal corresponding to the second spectral sensitivity of the measurement sheet in the second captured image. In addition, the ratio calculation unit 24 calculates, for each pixel, a second ratio between a third image signal corresponding to the first spectral sensitivity of the pattern in the first captured image and a fourth image signal corresponding to the second spectral sensitivity of the pattern in the second captured image. Furthermore, the ratio calculation unit 24 calculates a third ratio between a first spectral characteristic value corresponding to the first spectral sensitivity of the pattern and a second spectral characteristic value corresponding to the second spectral sensitivity of the pattern.

The image signal processing unit 28 executes, on the image signal of the measurement sheet in the captured image, processing of canceling out the effect of the spectral distribution of the illumination light in a case of imaging of the object to be imaged based on the image signal of the pattern in the object to be imaged and on the spectral characteristic value of the pattern. More specifically, the image signal processing unit 28 executes, on the first ratio of the image signal of the measurement sheet, the processing of canceling out the effect of the spectral distribution of the illumination light in a case of imaging of the object to be imaged based on the second ratio of the image signal of the pattern and on the third ratio of the spectral characteristic value of the pattern. Accordingly, the fourth ratio between a third spectral characteristic value corresponding to the first spectral sensitivity of the measurement sheet in the first captured image and a fourth spectral characteristic value corresponding to the second spectral sensitivity of the measurement sheet in the second captured image is calculated for each pixel.

The surface distribution estimation unit 30 estimates the surface distribution of the external energy amount applied to the measurement sheet from the fourth ratio calculated by the image signal processing unit 28 based on a relationship between the fourth ratio of the spectral characteristic value of the measurement sheet and the external energy amount applied to the measurement sheet.

The relationship between the fourth ratio of the spectral characteristic value of the measurement sheet and the external energy amount applied to the measurement sheet is a mapping relationship in which the external energy amount is uniquely determined based on the fourth ratio. This mapping relationship is known. The relationship between the fourth ratio and the external energy amount is obtained in advance based on the mapping relationship. For example, the relationship between the fourth ratio and the external energy amount can be represented using a look up table (LUT).

The display processing unit 32 displays various images, information, and the like on the display unit 14. In the present embodiment, in a case where, for example, the object to be imaged is imaged in accordance with the operation (imaging instruction) of the user, the display processing unit 32 displays the image of the object to be imaged on the display unit 14.

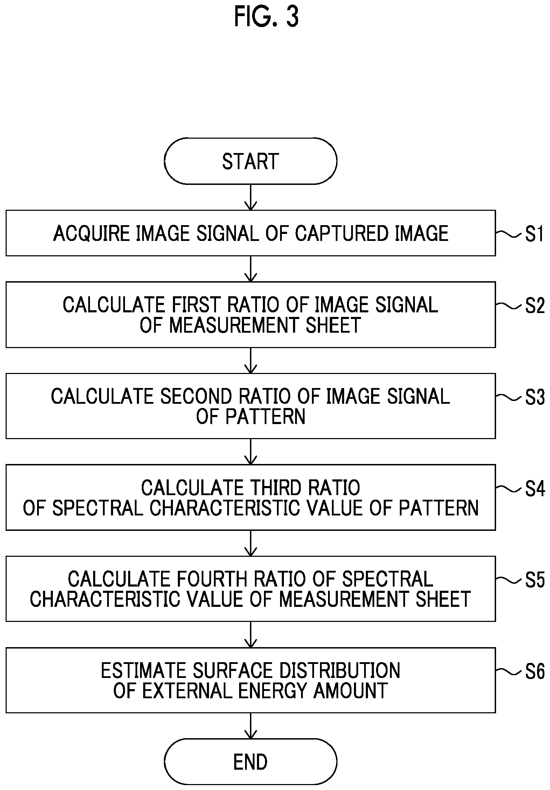

Next, an operation of the image processing apparatus 10 will be described with reference to the flowchart illustrated in Fig. 3.

The user images the object to be imaged under any illumination light. For example, the user holds the image processing apparatus 10 that is a smartphone in hand and provides the imaging instruction of the object to be imaged by performing the operation of the user through the operating unit 16 while viewing the image of the object to be imaged displayed on the display unit 14.

Accordingly, the object to be imaged is imaged at the same time by the imaging unit 12 using the first sensor having the first spectral sensitivity and the second sensor having the second spectral sensitivity, and the image signal of the first captured image corresponding to the first spectral sensitivity and the image signal of the second captured image corresponding to the second spectral sensitivity are output.

The image signal of the first captured image and the image signal of the second captured image output from the imaging unit 12 are acquired by the image signal acquisition unit 22 (step S1).

Next, the first ratio between the first image signal corresponding to the first spectral sensitivity of the measurement sheet in the first captured image and the second image signal corresponding to the second spectral sensitivity of the measurement sheet in the second captured image is calculated for each pixel by the ratio calculation unit 24 (step S2).

In addition, the second ratio between the third image signal corresponding to the first spectral sensitivity of the pattern in the first captured image and the fourth image signal corresponding to the second spectral sensitivity of the pattern in the second captured image is calculated for each pixel (step S3).

Furthermore, the third ratio between the first spectral characteristic value corresponding to the first spectral sensitivity of the pattern and the second spectral characteristic value corresponding to the second spectral sensitivity of the pattern is calculated (step S4).

Next, the processing of canceling out the effect of the spectral distribution of the illumination light in a case of imaging of the object to be imaged is executed on the first ratio of the image signal of the measurement sheet by the image signal processing unit 28 based on the second ratio of the image signal of the pattern and on the third ratio of the spectral characteristic value of the pattern. Accordingly, the fourth ratio between the third spectral characteristic value corresponding to the first spectral sensitivity of the measurement sheet in the first captured image and the fourth spectral characteristic value corresponding to the second spectral sensitivity of the measurement sheet in the second captured image is calculated for each pixel (step S5).

The surface distribution of the external energy amount applied to the measurement sheet is estimated from the fourth ratio by the surface distribution estimation unit 30 based on the relationship, obtained in advance, between the fourth ratio of the spectral characteristic value of the measurement sheet and the external energy amount applied to the measurement sheet (step S6).

Next, the processing of canceling out the effect of the spectral distribution of the illumination light in a case of imaging of the object to be imaged will be more specifically described.

An image signal G(x, y) of the measurement sheet in the captured image of the object to be imaged is represented by Expression (1) below.

$$G(x, y) \propto S(x, y) * SP(x, y, \lambda) * R(x, y, \lambda) * C(\lambda) \ldots \text{Expression (1)}$$

Here, S(x, y) is a surface distribution of intensity of the illumination light. SP(x, y, $\lambda$) is the spectral distribution of the illumination light. R(x, y, $\lambda$) is the surface distribution of the spectral characteristic value of the measurement sheet. C($\lambda$) is the spectral sensitivity of the sensor. In addition, (x, y) represents two-dimensional coordinates in the measurement sheet. In addition, $\lambda$ is a central wavelength of the wavelength range corresponding to the spectral sensitivity of the sensor.

As illustrated in Expression (1), the image signal G(x, y) of the measurement sheet in the captured image of the object to be imaged includes a distribution of an image signal that is originally not present, that is, effects of the surface distribution S(x, y) of the intensity of the illumination light and of the spectral distribution SP(x, y, $\lambda$) of the illumination light. Thus, the external energy amount applied to the measurement sheet cannot be accurately obtained from the image signal G(x, y) of the measurement sheet.

Here, in a case where a wavelength $\lambda$1 corresponding to the first spectral sensitivity and a wavelength $\lambda$2

corresponding to the second spectral sensitivity are focused on, a first image signal G1(x, y) corresponding to the wavelength λ1 of the measurement sheet in the first captured image of the object to be imaged captured by the first sensor is represented by Expression (2) below. In addition, a second image signal G2(x, y) corresponding to the wavelength λ2 of the measurement sheet in the second captured image of the object to be imaged captured by the second sensor is represented by Expression (3) below.

$$G1(x, y) = S(x, y) * SP(x, y, \lambda1) * R(x, y, \lambda1) * C(\lambda1) ... \text{Expression (2)}$$

$$G2(x, y) = S(x, y) * SP(x, y, \lambda2) * R(x, y, \lambda2) * C(\lambda2) ... \text{Expression (3)}$$

The ratio G1(x, y)/G2(x, y) (first ratio) between the first image signal G1(x, y) of the measurement sheet illustrated in Expression (2) and the second image signal G2(x, y) of the measurement sheet illustrated in Expression (3) is represented by Expression (4) below.

$$G1(x, y)/G2(x, y)$$
$$= \{S(x, y) * SP(x, y, \lambda1) * R(x, y, \lambda1) * C(\lambda1)\}/\{S(x, y) * SP(x, y, \lambda2) * R(x, y, \lambda2) * C(\lambda2)\}$$
$$= S(x, y)/S(x, y) * SP(x, y, \lambda1)/SP(x, y, \lambda2) * R(x, y, \lambda1)/R(x, y, \lambda2) * C(\lambda1)/C(\lambda2)$$
$$= SP(x, y, \lambda1)/SP(x, y, \lambda2) * R(x, y, \lambda1)/R(x, y, \lambda2) * C(\lambda1)/C(\lambda2) ... \text{Expression (4)}$$

In Expression (4), the effect of the surface distribution S(x, y) of the intensity of the illumination light is canceled out. That is, the ratio G1(x, y)/G2(x, y) is perceived as being a signal that does not depend on the surface distribution S(x, y) of the intensity of the illumination light.

Next, a third image signal GP1(x, y) corresponding to the wavelength λ1 of the pattern in the first captured image is represented by Expression (5) below. In addition, a fourth image signal GP2(x, y) corresponding to the wavelength λ2 of the pattern in the second captured image is represented by Expression (6) below.

$$GP1(x, y) = S(x, y) * SP(x, y, \lambda1) * P(\lambda1) * C(\lambda1) ... \text{Expression (5)}$$

$$GP2(x, y) = S(x, y) * SP(x, y, \lambda2) * P(\lambda2) * C(\lambda2) ... \text{Expression (6)}$$

Here, P(λ1) is the first spectral characteristic value corresponding to the wavelength λ1 of the pattern. P(λ2) is the second spectral characteristic value corresponding to the wavelength λ2 of the pattern. The first spectral characteristic value and the second spectral characteristic value of the pattern are known.

Here, in a case where the color of the pattern has a different hue from the color of the color developing portion of the measurement sheet as in the present embodiment, it is possible to, using a well-known technology, extract a plurality of hue regions of which the hues are different from each other, from the captured image of the object to be imaged and to, furthermore, specify a region of the pattern and a region of the measurement sheet other than the region of the pattern from among the plurality of hue regions extracted from the captured image based on known arrangement information of the pattern.

The arrangement information of the pattern includes information related to arrangement of the pattern. In the present embodiment, the arrangement information of the pattern includes information such as the shape, the size, the arrangement interval, and the number of dots constituting the pattern.

A plane of the captured image of the object to be imaged includes a region in which the pattern is present and a region in which the pattern is not present. Thus, after the region of the pattern in the captured image is specified, the image signal of the pattern after interpolation is generated by interpolating the region in which the pattern is not present based on the image signal of the pattern in the captured image using a well-known two-dimensional interpolation technology.

The processing of canceling out the effect of the spectral distribution of the illumination light in a case of imaging of the object to be imaged can be executed on the image signal of the measurement sheet in the object to be imaged based on the obtained image signal of the pattern after interpolation.

Next, the ratio GP1(x, y)/GP2(x, y) (second ratio) between the third image signal GP1(x, y) of the pattern illustrated in Expression (5) and the fourth image signal GP2(x, y) of the pattern illustrated in Expression (6) is represented by Expression (7) below.

$$GP1(x, y)/GP2(x, y)$$

$$= \{S(x, y) * SP(x, y, \lambda1) * P(\lambda1) * C(\lambda1)\}/\{S(x, y) * SP(x, y, \lambda2) * P(\lambda2) * C(\lambda2)\}$$

$$= S(x, y)/S(x, y) * SP(x, y, \lambda1)/SP(x, y, \lambda2) * P(\lambda1)/P(\lambda2) * C(\lambda1)/C(\lambda2)$$

$$= SP(x, y, \lambda1)/SP(x, y, \lambda2) * P(\lambda1)/P(\lambda2) * C(\lambda1)/C(\lambda2) \ ... \ \text{Expression (7)}$$

The effect of the surface distribution S(x, y) of the intensity of the illumination light is also canceled out in the ratio GP1(x, y)/GP2(x, y).

In a case where the ratio P(λ1)/P(λ2) (third ratio) on the right side of Expression (7) is moved to the left side, Expression (7) is represented as Expression (8) below.

$$GP1(x, \ y)/GP2(x, \ y) \ * \ P(\lambda2)/P(\lambda1) \ = \ SP(x, \ y, \ \lambda1)/SP(x, \ y, \ \lambda2) \ * \ C(\lambda1)/C(\lambda2) \ ...$$

$$\text{Expression (8)}$$

Here, the right side of Expression (4) can be decomposed into two terms A and B as follows.

$$SP(x, y, \lambda1)/SP(x, y, \lambda2) * C(\lambda1)/C(\lambda2) \ ... \ \text{Term A}$$

$$R(x, y, \lambda1)/R(x, y, \lambda2) \ ... \ \text{Term B}$$

By imaging the object to be imaged using the first sensor and the second sensor having spectral sensitivities corresponding to wavelength ranges such as the wavelengths λ1 and λ2 that are narrow ranges having a full width at half maximum of less than or equal to 30 nm, a surface distribution of the term A can be obtained from the image signal of the pattern that is approximately evenly disposed on the measurement sheet, and that has an approximately even characteristic value distribution. Accordingly, a signal of only the term B can be obtained by removing the obtained term A from the right side of Expression (4).

Next, in a case where Expression (8) is substituted in the ratio G1(x, y)/G2(x, y) illustrated in Expression (4), the ratio G1(x, y)/G2(x, y) is represented by Expression (9) below.

$$G1(x, \ y)/G2(x, \ y) \ = \ GP1(x, \ y)/GP2(x, \ y) \ * \ P(\lambda2)/P(\lambda1) \ * \ R(x, \ y, \ \lambda1)/R(x, \ y, \ \lambda2) \ ...$$

$$\text{Expression (9)}$$

In Expression (9), effects of the spectral distribution SP(x, y, λ) of the illumination light and of the spectral sensitivity C(λ) of the sensor are canceled out. That is, the ratio G1(x, y)/G2(x, y) is perceived as being a signal that does not depend on the spectral distribution SP(x, y, λ) of the illumination light.

Accordingly, the ratio R(x, y, λ1)/R(x, y, λ2) (fourth ratio) is represented by Expression (10) below from Expression (9).

$$R(x, \ y, \ \lambda1)/R(x, \ y, \ \lambda2) \ = \ G1(x, \ y)/G2(x, \ y) \ * \ GP2(x, \ y)/GP1(x, \ y) \ * \ P(\lambda1)/P(\lambda2) \ ...$$

$$\text{Expression (10)}$$

By executing, on the ratio (first ratio) of the image signal G(x, y) of the measurement sheet, the processing of canceling out the effect of the spectral distribution of the illumination light in a case of imaging of the object to be imaged based on the ratio (second ratio) of the image signal GP(x, y) of the pattern and on the ratio (third ratio) of the characteristic value P of the pattern, the ratio R(x, y, λ1)/R(x, y, λ2) (fourth ratio) of the spectral characteristic value of the measurement sheet can be calculated.

Similarly, a plurality of hue regions of which the hues are different from each other are extracted from the captured image of the object to be imaged, and the region of the measurement sheet, in other words, a region in which the pattern is not disposed on the measurement sheet, is specified from among the plurality of hue regions extracted from the captured image based on the arrangement information of the pattern.

In the region in which the pattern is present, a region corresponding to the color developing portion of the measurement sheet is not present. Thus, after the region of the measurement sheet in the captured image is specified, the image signal of the measurement sheet after interpolation is generated by interpolating the region in which the pattern is present based on the image signal of the measurement sheet near the region in which the pattern is present in the captured image, using a well-known two-dimensional interpolation technology.

Next, the processing of canceling out the effect of the spectral distribution of the illumination light in a case of imaging of the object to be imaged, that is, processing of calculating the ratio $R(x, y, \lambda 1)/R(x, y, \lambda 2)$ (fourth ratio) of the spectral characteristic value of the measurement sheet, is executed on the image signal of the measurement sheet after interpolation.

By obtaining, in advance, the relationship between the ratio $R(x, y, \lambda 1)/R(x, y, \lambda 2)$ of the spectral characteristic value of the measurement sheet and the external energy amount applied to the measurement sheet, the surface distribution of the external energy amount applied to the measurement sheet can be estimated from the ratio $R(x, y, \lambda 1)/R(x, y, \lambda 2)$ of the spectral characteristic value of the measurement sheet based on the relationship.

In the image processing apparatus 10, the effects of the surface distribution of the intensity of the illumination light and of the spectral distribution of the illumination light can be canceled out from the image signal of the measurement sheet in the captured image. Accordingly, the user can image an object to be measured under any illumination light without considering the surface distribution of the intensity of the illumination light and the spectral distribution of the illumination light, and accurately estimate the surface distribution of the external energy amount applied to the measurement sheet from the image signal (color optical density) of the measurement sheet in the captured image.

While a case where the pattern is formed on the measurement sheet is illustratively described, the present invention is not limited thereto. The pattern may be formed on a pressing plate for pressing the measurement sheet from above, and the pressing plate may be disposed to overlap on the measurement sheet.

Fig. 5 is a plan view concept diagram of an example representing a configuration of the measurement sheet. A color developing portion 42 of a donut shape that has developed the color of the density corresponding to the external energy amount under application of the external energy is formed in a center portion of a measurement sheet 40 illustrated in Fig. 5.

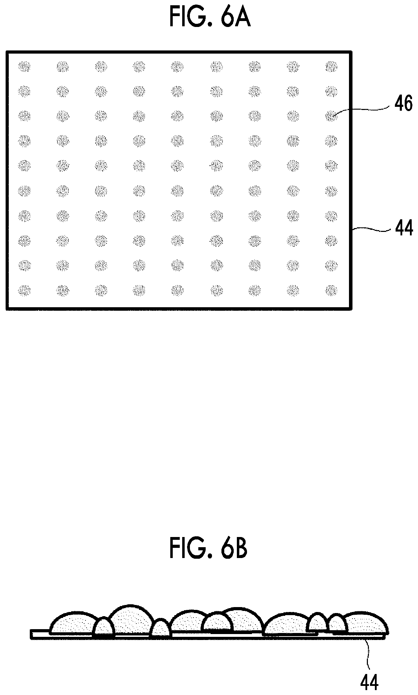

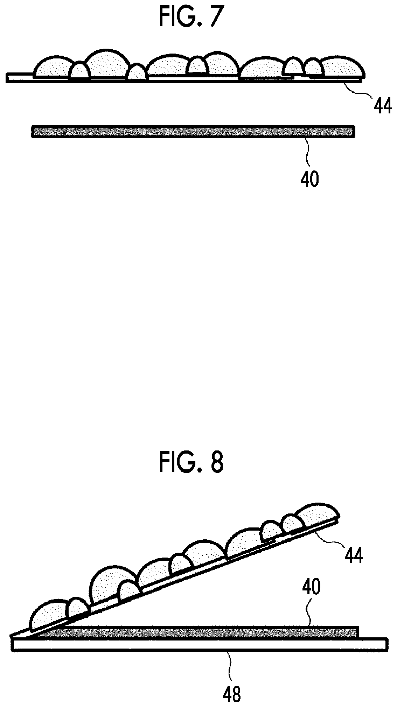

Next, Fig. 6A and Fig. 6B are a plan view concept diagram and a side view concept diagram of an example representing a configuration of the pressing plate. A pressing plate 44 is a transparent or approximately transparent plate. Accordingly, a region in which a pattern 46 is formed in the pressing plate 44 has an optical characteristic of mainly having a reflected light component with respect to at least the first spectral sensitivity or the second spectral sensitivity. A region in which the pattern 46 is not formed in the pressing plate 44 has an optical characteristic of mainly having a transmitted light component with respect to at least the first spectral sensitivity or the second spectral sensitivity. In the pressing plate 44, a surface directly irradiated with the illumination light has a light scattering property. As illustrated in Fig. 6B, the pressing plate 44 of the present embodiment is formed to have a rough surface on the surface directly irradiated with the illumination light. Accordingly, surface reflection of the illumination light with which the pressing plate 44 is irradiated is prevented, and the scattered illumination light is transmitted through the pressing plate 44. In addition, in the pressing plate 44, as illustrated in Fig. 7, the pattern 46 is formed on a surface that is in contact with the measurement sheet 40. In the present embodiment, the dot pattern 46 is formed as illustrated in Fig. 6A.

Fig. 8 is a side view concept diagram of an example representing a configuration in a case of imaging the object to be imaged. A support plate 48 illustrated in Fig. 8 is a flat or approximately flat plate having uniform reflectance. In a case of imaging the object to be imaged, the object to be imaged including the measurement sheet 40 and the pattern 46 is imaged in a state where the measurement sheet 40 is disposed on a surface having uniform reflectance in the support plate 48, and where the pressing plate 44 in which the pattern 46 is formed is disposed to overlap on the measurement sheet 40.

It is desirable that the object to be imaged including the measurement sheet 40 and the pattern 46 is imaged in a state where positions of the support plate 48, the measurement sheet 40, and the pressing plate 44 are fixed using a position fixing mechanism. While the position fixing mechanism is not particularly limited, a hinge that connects the support plate 48 to the pressing plate 44 on one side of each of the support plate 48 and the pressing plate 44, a hook that fixes the positions of the support plate 48, the measurement sheet 40, and the pressing plate 44 on a side present at a position facing the one side, and the like can be used.

By imaging the object to be imaged in a state where the positions of the support plate 48, the measurement sheet 40, and the pressing plate 44 are fixed by the position fixing mechanism, the object to be imaged can be imaged without occurrence of misregistration between the measurement sheet 40 and the pattern 46.

The image processing apparatus according to the embodiment of the present invention is not limited to a smartphone and may be a digital camera, a digital video camera, a scanner, or the like or can be implemented as an application program operating on these apparatuses.

Examples of the processor include a central processing unit (CPU) that is a general-purpose processor functioning as various processing units by executing software (program), a programmable logic device (PLD) such as a field programmable gate array (FPGA) that is a processor having a circuit configuration changeable after manufacture, and a dedicated electric circuit such as an application specific integrated circuit (ASIC) that is a processor having a circuit configuration dedicatedly designed to execute specific processing.

One processing unit may be composed of one of the various processors or may be composed of a combination of two or more processors of the same type or different types, for example, a combination of a plurality of FPGAs or a combination of an FPGA and a CPU. In addition, a plurality of processing units may be composed of one of the various processors, or two or more of the plurality of processing units may be collectively configured using one processor.

For example, as represented by a computer such as a server and a client, a form in which one processor is composed of a combination of one or more CPUs and software and the processor functions as the plurality of processing units is possible. In addition, as represented by a system on chip (SoC) and the like, a form of using a processor that implements functions of the entire system including the plurality of processing units in one integrated circuit (IC) chip is possible.

Furthermore, a hardware configuration of the various processors is more specifically an electric circuit (circuitry) in which circuit elements such as semiconductor elements are combined.

In addition, for example, the method according to the embodiment of the present invention can be executed by a program causing a computer (processor) to execute each step of the method. In addition, a computer readable recording medium on which the program is recorded can also be provided.

While the present invention has been described in detail so far, the present invention is not limited to the embodiment and may be subjected to various improvements and changes without departing from the gist of the present invention.

Explanation of References

10: image processing apparatus
12: imaging unit
14: display unit
16: operating unit
18: storage unit
20: processor
22: image signal acquisition unit
24: ratio calculation unit
28: image signal processing unit
30: surface distribution estimation unit
32: display processing unit
34: internal bus
40: measurement sheet
42: color developing portion
44: pressing plate
46: pattern
48: support plate

**Claims**

1. An image processing method comprising:

    acquiring an image signal of a captured image of an object to be imaged including a measurement sheet that has developed a color of a density corresponding to an external energy amount under application of external energy, and including a regular pattern provided on the measurement sheet; and
    executing, on an image signal of the measurement sheet in the captured image, processing of canceling out an effect of a spectral distribution of illumination light in a case of imaging of the object to be imaged based on an image signal of the pattern in the object to be imaged and on a spectral characteristic value of the pattern.

2. The image processing method according to claim 1,

   wherein an image signal of a first captured image corresponding to a first spectral sensitivity and an image signal of a second captured image corresponding to a second spectral sensitivity of the object to be imaged captured by a sensor are acquired,
   a first ratio between a first image signal corresponding to the first spectral sensitivity of the measurement sheet in the first captured image and a second image signal corresponding to the second spectral sensitivity of the measurement sheet in the second captured image is calculated for each pixel,
   a second ratio between a third image signal corresponding to the first spectral sensitivity of the pattern in the first captured image and a fourth image signal corresponding to the second spectral sensitivity of the pattern in the second captured image is calculated for each pixel,
   a third ratio between a first spectral characteristic value corresponding to the first spectral sensitivity of the pattern and a second spectral characteristic value corresponding to the second spectral sensitivity of the pattern is calculated, and
   a fourth ratio between a third spectral characteristic value corresponding to the first spectral sensitivity of the measurement sheet in the first captured image and a fourth spectral characteristic value corresponding to the second spectral sensitivity of the measurement sheet in the second captured image is calculated for each pixel by executing the processing on the first ratio based on the second ratio and on the third ratio.

3. The image processing method according to claim 2,
   wherein a wavelength range corresponding to at least one of the first spectral sensitivity or the second spectral sensitivity has a full width at half maximum of less than or equal to 30 nm.

4. The image processing method according to claim 2 or 3,
   wherein a surface distribution of the external energy amount applied to the measurement sheet is estimated from the fourth ratio based on a relationship between the fourth ratio and the external energy amount applied to the measurement sheet.

5. The image processing method according to any one of claims 1 to 4,
   wherein the pattern is formed on the measurement sheet.

6. The image processing method according to any one of claims 2 to 4,
   wherein the pattern is formed on a pressing plate, a region in which the pattern is formed in the pressing plate has an optical characteristic of mainly having a reflected light component with respect to at least the first spectral sensitivity or the second spectral sensitivity, a region in which the pattern is not formed in the pressing plate has an optical characteristic of mainly having a transmitted light component with respect to at least the first spectral sensitivity or the second spectral sensitivity, and the pressing plate is disposed to overlap on the measurement sheet.

7. The image processing method according to claim 6,
   wherein in the pressing plate, a surface directly irradiated with the illumination light has a light scattering property, and the pattern is formed on a surface that is in contact with the measurement sheet.

8. The image processing method according to claim 6 or 7,
   wherein the object to be imaged including the measurement sheet and the pattern is imaged in a state where the measurement sheet is disposed on a surface having uniform reflectance in a support plate, and where the pressing plate is disposed to overlap on the measurement sheet.

9. The image processing method according to claim 8,
   wherein the object to be imaged including the measurement sheet and the pattern is imaged in a state where positions of the support plate, the measurement sheet, and the pressing plate are fixed using a position fixing mechanism.

10. The image processing method according to any one of claims 1 to 9,
    wherein a color of the pattern has a different hue from a color of a color developing portion of the measurement sheet.

11. The image processing method according to claim 10,

    wherein a plurality of hue regions of which the hues are different from each other are extracted from the captured image,
a region of the pattern is specified from among the plurality of hue regions based on arrangement information of the pattern, and
the image signal of the pattern after interpolation is generated by interpolating a region in which the pattern is not present, using a two-dimensional interpolation technology, and the processing is executed on the image signal of the measurement sheet in the object to be imaged based on the image signal of the pattern after interpolation.

12. The image processing method according to claim 10 or 11,

wherein a plurality of hue regions of which the hues are different from each other are extracted from the captured image,
a region of the measurement sheet is specified from among the plurality of hue regions based on arrangement information of the pattern, and
the image signal of the measurement sheet after interpolation is generated by interpolating a region in which the pattern is present using a two-dimensional interpolation technology, and the processing is executed on the image signal of the measurement sheet after interpolation.

13. An image processing apparatus comprising:

a processor,
wherein the processor is configured to:

acquire an image signal of a captured image of an object to be imaged including a measurement sheet that has developed a color of a density corresponding to an external energy amount under application of external energy, and including a regular pattern provided on the measurement sheet; and
execute, on an image signal of the measurement sheet in the captured image, processing of canceling out an effect of a spectral distribution of illumination light in a case of imaging of the object to be imaged based on an image signal of the pattern in the object to be imaged and on a spectral characteristic value of the pattern.

14. A program causing a computer to execute each step of the image processing method according to any one of claims 1 to 12.

15. A computer readable recording medium on which a program causing a computer to execute each step of the image processing method according to any one of claims 1 to 12 is recorded.

# FIG. 1

10

| 12 | 14 | 16 |
|---|---|---|
| IMAGING UNIT | DISPLAY UNIT | OPERATING UNIT |

34

| STORAGE UNIT | PROCESSOR |
|---|---|

18

20

# FIG. 2

20

| 22 | 32 |
|---|---|
| IMAGE SIGNAL ACQUISITION UNIT | DISPLAY PROCESSING UNIT |

34

| IMAGE SIGNAL PROCESSING UNIT | RATIO CALCULATION UNIT | SURFACE DISTRIBUTION ESTIMATION UNIT |
|---|---|---|

28

24

30

# FIG. 3

```
           ┌─────────────┐
           │    START    │
           └──────┬──────┘
                  ↓
┌─────────────────────────────────────────┐
│  ACQUIRE IMAGE SIGNAL OF CAPTURED IMAGE  │～S1
└──────────────────┬──────────────────────┘
                   ↓
┌─────────────────────────────────────────┐
│     CALCULATE FIRST RATIO OF IMAGE SIGNAL│～S2
│         OF MEASUREMENT SHEET             │
└──────────────────┬──────────────────────┘
                   ↓
┌─────────────────────────────────────────┐
│   CALCULATE SECOND RATIO OF IMAGE SIGNAL │～S3
│             OF PATTERN                   │
└──────────────────┬──────────────────────┘
                   ↓
┌─────────────────────────────────────────┐
│           CALCULATE THIRD RATIO          │～S4
│  OF SPECTRAL CHARACTERISTIC VALUE OF PATTERN│
└──────────────────┬──────────────────────┘
                   ↓
┌─────────────────────────────────────────┐
│    CALCULATE FOURTH RATIO OF SPECTRAL    │～S5
│  CHARACTERISTIC VALUE OF MEASUREMENT SHEET│
└──────────────────┬──────────────────────┘
                   ↓
┌─────────────────────────────────────────┐
│       ESTIMATE SURFACE DISTRIBUTION      │～S6
│        OF EXTERNAL ENERGY AMOUNT         │
└──────────────────┬──────────────────────┘
                   ↓
           ┌─────────────┐
           │     END     │
           └─────────────┘
```

## FIG. 4

## FIG. 5

42

40

FIG. 6A

46

44

FIG. 6B

44

# FIG. 7

44

40

# FIG. 8

44

40

48

## INTERNATIONAL SEARCH REPORT

| International application No. |
| --- |
| **PCT/JP2021/032591** |

| A. | CLASSIFICATION OF SUBJECT MATTER |
| --- | --- |

*G01L 1/24*(2006.01)i; *G01L 1/00*(2006.01)i; *G01L 5/00*(2006.01)i
FI:   G01L1/24 Z; G01L1/00 E; G01L5/00 101A

According to International Patent Classification (IPC) or to both national classification and IPC

| B. | FIELDS SEARCHED |
| --- | --- |

Minimum documentation searched (classification system followed by classification symbols)

G01L1/00; G01L1/24; G01L5/00; G01J1/58

Documentation searched other than minimum documentation to the extent that such documents are included in the fields searched

Published examined utility model applications of Japan 1922-1996
Published unexamined utility model applications of Japan 1971-2021
Registered utility model specifications of Japan 1996-2021
Published registered utility model applications of Japan 1994-2021

Electronic data base consulted during the international search (name of data base and, where practicable, search terms used)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | JP 2015-215291 A (ISIN INC) 03 December 2015 (2015-12-03) paragraphs [0015]-[0033], fig. 2-5 | 1, 5, 10, 13-15 |
| A | | 2-4, 6-9, 11-12 |
| A | JP 1-180431 A (FUJI PHOTO FILM CO LTD) 18 July 1989 (1989-07-18) | 1-15 |
| A | JP 64-41828 A (MITSUBISHI ELECTRIC CORP) 14 February 1989 (1989-02-14) | 1-15 |
| A | US 2018/0104973 A1 (GREENER, Bryan) 19 April 2018 (2018-04-19) | 1-15 |
| A | US 2004/0179101 A1 (BODNAR, Gary) 16 September 2004 (2004-09-16) | 1-15 |
| A | JP 8-96060 A (NIPPONDENSO CO LTD) 12 April 1996 (1996-04-12) | 1-15 |

☐ Further documents are listed in the continuation of Box C.    ☑ See patent family annex.

| | | |
| --- | --- | --- |
| * | Special categories of cited documents: | "T" later document published after the international filing date or priority date and not in conflict with the application but cited to understand the principle or theory underlying the invention |
| "A" | document defining the general state of the art which is not considered to be of particular relevance | |
| "E" | earlier application or patent but published on or after the international filing date | "X" document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&" document member of the same patent family |

| Date of the actual completion of the international search | Date of mailing of the international search report |
| --- | --- |
| **24 September 2021** | **05 October 2021** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

**INTERNATIONAL SEARCH REPORT**
Information on patent family members

International application No.

**PCT/JP2021/032591**

| Patent document cited in search report | | | Publication date (day/month/year) | Patent family member(s) | | | Publication date (day/month/year) |
|---|---|---|---|---|---|---|---|
| JP | 2015-215291 | A | 03 December 2015 | (Family: none) | | | |
| JP | 1-180431 | A | 18 July 1989 | (Family: none) | | | |
| JP | 64-41828 | A | 14 February 1989 | (Family: none) | | | |
| US | 2018/0104973 | A1 | 19 April 2018 | WO | 2016/162666 | A1 | |
| | | | | EP | 3280599 | A1 | |
| US | 2004/0179101 | A1 | 16 September 2004 | WO | 2004/056135 | A1 | |
| | | | | EP | 1570684 | A1 | |
| | | | | AU | 2003297064 | A1 | |
| JP | 8-96060 | A | 12 April 1996 | (Family: none) | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2015215291 A

- WO 2006040832 A